# EUROPÄISCHE PATENTSCHRIFT

(11) **EP 3 409 568 B1**
(45) Veröffentlichungstag und Bekanntmachung des Hinweises auf die Patenterteilung: **08.12.2021**
(21) Anmeldenummer: 18163971.7
(22) Anmeldetag: 26.03.2018
(51) Int. Cl.: B62D 33/06, F16F 9/54

(54) **DÄMPFUNGSSYSTEM**
DAMPING SYSTEM
SYSTÈME D'AMORTISSEMENT

(30) Priorität: 31.05.2017 DE 102017111872
(43) Veröffentlichungstag der Anmeldung: 05.12.2018
(73) Patentinhaber: CLAAS Tractor S.A.S., 78141 Vélizy-Villacoublay Cedex (FR)
(72) Erfinder: Barentin, Magali, 78810 Montgny le Bretonneurx (FR); Heilles, Yves, 94429 Le Plessis Trévise (FR); Alquier, Eric, 91120 Draveil (FR)
(74) Vertreter: CLAAS Gruppe

(56) Entgegenhaltungen:
- EP-A2- 2 484 579
- WO-A1-2014/099059
- US-A1- 2003 226 700

## Beschreibung

Die vorliegende Erfindung betrifft ein Verbindungselement gemäß dem Oberbegriff des Anspruches 1. Des Weiteren betrifft die vorliegende Erfindung ein Dämpfungssystem gemäß Oberbegriff des Anspruches 9, sowie ein landwirtschaftliches Fahrzeug gemäß dem Oberbegriff des Anspruches 10.

Aus der EP 2 484 579 A2 ist eine Kabinenlagerungsvorrichtung mit einer Überrollschutz-Struktur zur Lagerung einer Kabine eines Traktors bekannt.

Aus der US 2003/0226700 A1 ist eine Kabinenlagerung mit Panhardstab für einen Traktor bekannt.

Aus der WO 2014/099059 ist ein Kabinenlagerungssystem für ein Arbeitsfahrzeug bekannt.

Verbindungselemente sowie ein Dämpfungssystem und ein landwirtschaftliches Fahrzeug der eingangs genannten Art sind aus der DE 690 06 315 T2 bekannt. Das Dämpfungssystem umfasst vier elastisch verformbare Elemente, die beispielsweise zwischen einer Kabine und einem Fahrzeugrahmen an dem die Fahrzeugkabine gelagert ist, angeordnet sind. Ein hinteres Paar dieser Elemente ist mit der hinteren Kabinenbasis durch eine hintere Querstrebe verbunden. Ein vorderes Paar dieser Elemente ist jeweils durch Halteelemente mit der vorderen Kabinenbasis verbunden, wobei die Halteelemente mittels Längsstreben, die sich in Längsrichtung des Dämpfungssystems erstrecken, zusätzlich an einem hinteren Querträger angelenkt sind, der an dem Fahrzeugrahmen befestigt ist. Die elastischen Elemente sind dabei mittels Verbindungselementen in Form von Verbindungshaltern und Trägern an der Kabine angeordnet. Nachteilig bei dem offenbarten Dämpfungssystem ist, dass eine Vielzahl von Elementen aufwändig miteinander und mit dem Fahrzeugrahmen sowie der Kabine verbunden werden müssen, um ihre jeweilige Funktion ausüben zu können. Besonders ein Anpassen des Dämpfungssystems an unterschiedliche Kabinenformen oder unterschiedliche elastische Elemente verursacht aufgrund der Vielzahl an unterschiedlichen Elementen einen hohen konstruktiven und monetären Aufwand.

Es ist daher die Aufgabe der vorliegenden Erfindung, ein Verbindungselement für ein Dämpfungssystem bereitzustellen, welches neben einer Reduzierung der Kosten eine Vereinfachung der Montage ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Verbindungselement für eine Lagerstelle eines Dämpfungssystems zur Lagerung einer Kabine, insbesondere eines landwirtschaftlichen Fahrzeuges, umfasst einen ersten Montagebereich zur Aufnahme eines mit einem Tragelement verbundenen ersten Dämpfungsmittels zur Dämpfung einer Bewegung der Kabine. Gemäß der Erfindung weist das Verbindungselement einen zweiten Montagebereich zur alternativen Aufnahme eines zweiten Dämpfungsmittels auf. Diese Ausgestaltung des Verbindungselementes hat den Vorteil, dass durch die Anordnung eines zweiten Montagebereiches die alternative Anordnung eines zweiten, insbesondere unterschiedlich zu dem ersten Dämpfungsmittel ausgestalteten, Dämpfungsmittels ermöglicht wird. Durch Einsatz von zweiten Dämpfungsmitteln kann dabei eine andere Dämpfung der Kabine ermöglichen werden als mit den ersten Dämpfungsmitteln. Dies hat den Vorteil, dass bei Montage desselben Verbindungselementes an der Kabine unterschiedliche Dämpfungsmittel verbaut werden können. Dies ermöglicht eine Vereinfachung der Montage, insbesondere der Kabine und des Dämpfungssystems der Kabine. Zudem kann durch den Einsatz derselben Verbindungselemente für unterschiedliche Dämpfungsmittel durch höhere Stückzahlen eines einheitlichen Verbindungselementes Kosten reduziert werden.

Gemäß der Erfindung ist der zweite Montagebereich oberhalb des ersten, insbesondere bodenseitig des Verbindungselementes ausgebildeten, Montagebereiches angeordnet. Dies ermöglicht die Aufnahme von Dämpfungsmitteln unterschiedlicher Länge und beispielsweise unterschiedlich starken Dämpfungseigenschaften. Ein erstes Dämpfungsmittel kann beispielsweise in Form eines elastischen Gummidämpfers ausgebildet sein, welcher in vertikaler Richtung nur eine sehr geringe Erstreckung aufweist.

In einer weiter bevorzugten Ausgestaltung der Erfindung ist der zweite Montagebereich in Form einer Auskragung, insbesondere an einem oberen Ende des Verbindungselementes, ausgebildet. Die Ausbildung des zweiten Montagebereiches in Form einer Auskragung ermöglicht eine konstruktiv vereinfachte Aufnahme des zweiten Dämpfungsmittels, beispielsweise in Form eines Feder-Dämpfer-Elementes. Durch die Anordnung des zweiten Montagebereiches an einem oberen Ende des Verbindungselementes wird der verfügbare Bauraum optimal genutzt, so dass es möglich ist, zweite Dämpfungsmittel mit einer größtmöglichen Länge zu verbauen. Dies hat den Vorteil, dass für die Federung der Kabine auch länger bauende zweite Dämpfungsmittel verbaut werden können.

Vorzugsweise weist der zweite Montagebereich ein, insbesondere geschlossenes, Aufnahmeprofil zur Aufnahme des zweiten Dämpfungsmittels auf. Das Aufnahmeprofil ermöglicht eine besonders vorteilhafte Lagerung des zweiten Dämpfungsmittels mit einer verbesserten Krafteinleitung in die Kabine. Besonders vorteilhaft ist hierbei ein geschlossenes, beispielsweise rahmenförmiges, Aufnahmeprofil, welches das zweite Dämpfungsmittel endseitig zumindest teilweise umschließen kann.

Besonders bevorzugt weist der zweite Montagebereich einen Lagerbolzen zur gelenkigen Lagerung des zweiten Dämpfungsmittels auf. Durch den Lagerbolzen kann kabinenseitig eine gelenkige Lagerung des zweiten Dämpfungsmittels ermöglicht werden. Dies hat den Vorteil, dass ein Bewegungsausgleich des zweiten Dämpfungsmittels bei einer Bewegung der Kabine ermöglicht wird. In einer bevorzugten Ausgestaltung der Erfindung weist der zweite Montagebereich, und insbesondere das Aufnahmeprofil, dabei ein Sackloch und eine Durchgangsbohrung zur Lagerung des Lagerbolzens auf. Der Lagerbolzen kann durch die Durchgangsbohrung hindurch in das Sackloch geführt sein, in welchem beispielsweise ein Gewinde zum kraft- und/oder formschlüssigen Aufnehmen des Lagerbolzens ausgebildet sein kann. Dies ermöglicht eine vereinfachte Montage des Lagerbolzens an dem zweiten Montagebereich von einer Seite aus, was eine weitergehende Integration des Verbindungselementes in die Struktur der Kabine ermöglicht.

Vorteilhafterweise weist das Verbindungselement seitlich und/oder oberseitig Befestigungsbereiche zur Verbindung mit der Kabine auf. Durch die an dem Verbindungselement ausgebildeten Befestigungsbereiche kann das Verbindungselement ohne zusätzlichen Aufwand an unterschiedlich ausgebildeten Kabinen montiert werden, wobei durch die Verwendung eines einheitlichen Verbindungselementes die Anzahl an zu verbauenden unterschiedlichen Teilen verringert und so der Montageaufwand und Kosten reduziert werden können.

In einer bevorzugten Ausgestaltung der Erfindung ist ein Befestigungsbereich in Form eines Verbindungsprofils zur kraftschlüssigen und/oder formschlüssigen Verbindung mit der Kabine ausgebildet. Das Verbindungsprofil kann dabei beispielsweise als Steckverbindung zum Zusammenwirken mit der Kabine oder einem Bauteil der Kabine, beispielsweise einem Rahmenprofil, ausgebildet sein. Hierdurch kann das Verbindungselement in die tragende Struktur der Kabine integriert werden. Dies hat neben einer verbesserten Krafteinleitung in die Kabine den Vorteil, dass eine kostensparende Vormontage des Verbindungselementes zusammen mit der Kabine ermöglicht wird.

Das Verbindungselement ist vorzugsweise in Form eines Blechbauteils und/oder eines Gußbauteils ausgebildet. Die Ausbildung in Form eines Blechbauteils ermöglicht eine kostengünstige Fertigung, insbesondere für unterschiedliche Formen von Kabinen. Durch ein Verbindungselement in Form eines Gußbauteils ist das Verbindungselement besonders gut an aufzunehmende Kräfte anpassbar. Durch ein mehrteilig ausgebildetes Verbindungselement, beispielsweise mit Blechteilen und Gußteilen, wird eine kostengünstige und flexible Anpassung des Verbindungselementes an die gegebenen Randbedingungen wie Kosten, verfügbarer Bauraum und aufzunehmende Kräfte ermöglicht.

Des Weiteren wird die eingangs gestellte Aufgabe durch ein Dämpfungssystem zur Lagerung einer Kabine, insbesondere eines landwirtschaftlichen Fahrzeuges, mit mindestens einer Lagerstelle mit mindestens einem wie vorstehend beschriebenen Verbindungselement gelöst.

Weiterhin wird die eingangs gestellte Aufgabe durch ein landwirtschaftliches Fahrzeug, insbesondere Traktor, mit einer an einer Karosserie gelagerten Kabine gelöst, welches zur Lagerung der Kabine mindestens ein wie vorstehend beschriebenes und ausgebildetes Verbindungselement und/oder Dämpfungssystem aufweist. Nachfolgend wird die Erfindung unter Bezugnahme auf die anliegenden Zeichnungen näher erläutert.

Es zeigen:
- Fig. 1:: eine schematische perspektivische Ansicht eines Verbindungselementes mit einem ersten Dämpfungsmittel;
- Fig. 2:: eine schematische perspektivische Ansicht eines Verbindungselementes mit einem zweiten Dämpfungsmittel; und
- Fig. 3:: eine schematische perspektivische Ansicht des Verbindungselementes mit Befestigungsbereichen in Form von Verbindungsprofilen.

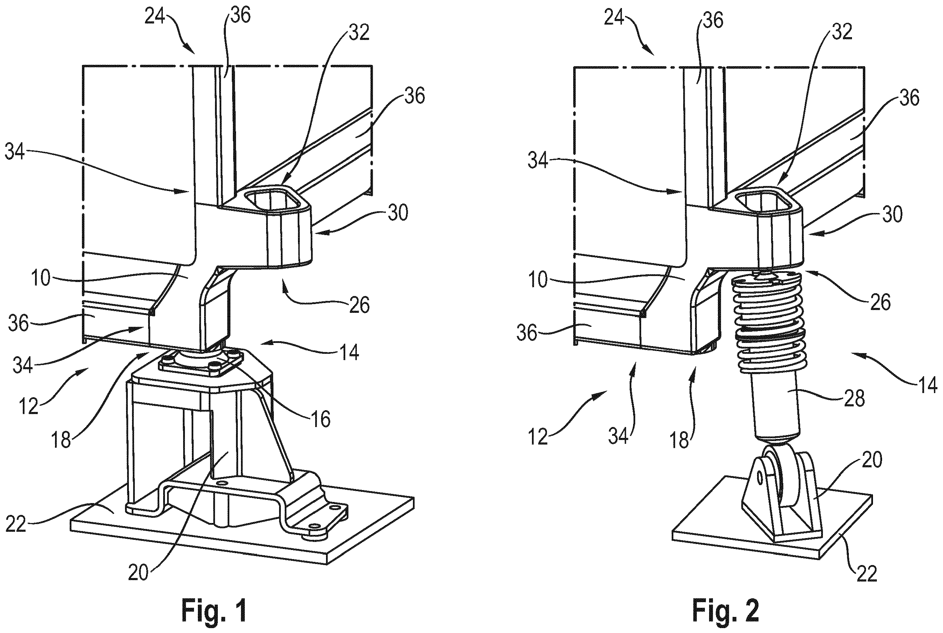

Die Darstellung in Fig. 1 zeigt eine perspektivische Ansicht eines Verbindungselementes 10 eines Dämpfungssystems 12, insbesondere für ein landwirtschaftliches Fahrzeug, mit einer Lagerstelle 14, welches ein erstes Dämpfungsmittel 16 zur Dämpfung von im Wesentlichen vertikalen Bewegungen aufweist. Das erste Dämpfungsmittel 16 ist dabei an einem ersten Montagebereich 18 des Verbindungselementes 10 angeordnet. Der erste Montagebereich 18 ist dabei bodenseitig des Verbindungselementes 10 angeordnet und im Wesentlichen plan ausgebildet. Das erste Dämpfungsmittel 16 kann ein oder mehrteilig ausgebildet sein und aus einem elastisch verformbaren Material, beispielsweise Gummi, bestehen. Das erste Dämpfungsmittel 24 kann dabei im Wesentlichen der Dämpfung von Vibrationen dienen.

Jede Lagerstelle 14 des Dämpfungssystems 12 weist ein Tragelement 20 auf, welches an einer Karosserie 22 des Fahrzeuges festgelegt ist, und ein Verbindungselement 10, welches mit einer Kabine 24 verbunden ist. Dabei sind das Tragelement 20 und das Verbindungselement 10 durch das jeweils mit diesen verbundenen erste Dämpfungsmittel 16 relativ zueinander beweglich miteinander verbunden. Ein Dämpfungssystem 12, insbesondere für ein landwirtschaftliches Fahrzeug, weist dabei mindestens zwei Lagerstellen 14 auf, welche insbesondere heckseitig an der Kabine 24 des Fahrzeuges angeordnet sein können. Denkbar ist auch eine Lagerung der Kabine 24 mit einem Dämpfungssystem 12, welches drei oder vier Lagerstellen 14 aufweist, wodurch eine Dämpfung der Kabine 24 sowohl front- als auch heckseitig ermöglicht wird.

Gemäß der Erfindung weist das Verbindungselement 10 einen zusätzlichen, zweiten Montagebereich 26 auf. Der zweite Montagebereich 26 dient dabei der Aufnahme eines zweiten Dämpfungsmittels 28, welches alternativ zu dem ersten Dämpfungsmittel 16 an dem Verbindungselement 10 angeordnet werden kann. Der zweite Montagebereich 26 ist dabei oberhalb des ersten Montagebereiches 18 an einem oberen Ende des Verbindungselementes 10 angeordnet und in Form einer Auskragung 30 ausgebildet. Der zweite Montagebereich 20, insbesondere in Form der Auskragung 30, kann dabei heckseitig der Kabine 24 ausgebildet sein. Die der zweite Montagebereich 26 bzw. die Auskragung 30 ist dabei in Form eines geschlossenen Aufnahmeprofils 32 zur Aufnahme eines zweiten Dämpfungsmittels 28 ausgebildet.

Das in der Figur 2 dargestellte zweite Dämpfungsmittel 28 ist in Form eines Feder-Dämpfer-Elementes ausgebildet, welches besonders der Dämpfung von Schwingungen und/oder Vibrationen der Kabine 24 dienen kann. Das zweite Dämpfungsmittel 28 ist dabei bodenseitig an dem Tragelement 20 angeordnet und an seinem oberen Ende in dem zweiten Montagebereich 26 des Verbindungselementes 10 gelagert. Der rahmenförmig ausgebildete zweite Montagebereich 26 umschließt dabei das zweite Dämpfungsmittel 28 an seinem oberen Ende, wodurch eine verbesserte Kraftaufnahme ermöglicht wird. Das Verbindungselement 10 weist seitlich und oberseitig Befestigungsbereiche 34 zur Verbindung des Verbindungselementes 10 mit der Kabine 24 auf. Das Verbindungselement 10 ist in den Befestigungsbereichen 34 mit Rahmenprofilen 36 der Kabine 24 verbunden und dadurch in die tragende Struktur der Kabine 24 integriert.

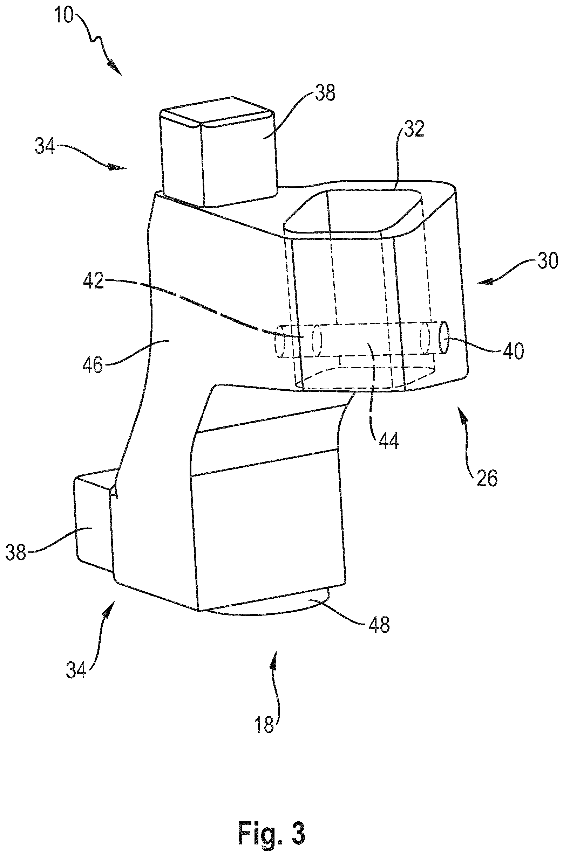

In Figur 3 ist das Verbindungselement 10 einzeln dargestellt. Die Befestigungsbereiche 34 des Verbindungselementes 10 sind in Form von Verbindungsprofilen 38 zur kraftschlüssigen und/oder formschlüssigen Verbindung mit der Kabine 24 ausgebildet. Die Verbindungsprofile 38 sind dabei in ihrem Querschnitt derart an die Rahmenprofile (nicht dargestellt) angepasst, dass die Rahmenprofile 36 auf die Verbindungsprofile 38 aufsteckbar sind. Hierdurch kann eine besonders belastbare Verbindung zwischen den Profilen erreicht werden. Die Verbindungsprofile 38 sind dabei obenseitig und seitlich an dem Verbindungselement 10 angeordnet. Der zweite Montagebereich 26 weist in dem Aufnahmeprofil 32 eine Durchgangsbohrung 40 sowie ein diesem gegenüberliegendes Sackloch 42 zur Aufnahme eines Lagerbolzens 44 auf. Der Lagerbolzen 44 dient der oberseitigen Lagerung des zweiten Dämpfungsmittels in dem zweiten Montagebereich 26, wodurch ein Bewegungsausgleich des zweiten Dämpfungsmittels bei einer Verlagerung der Kabine ermöglicht wird.

Das dargestellte Verbindungselement 10 ist als Gußteil 46 ausgebildet. Denkbar ist auch, dass das Verbindungselement 10 als Blechbauteil oder in Gemischtbauweise, als Gußteil und Blechbauteil, hergestellt ist. Hierbei können beispielsweise der erste und/oder zweite Montagebereich 18, 26 als Blechbauteil ausgebildet sein, welche an einem Gußteil angeordnet sind. Die bodenseitig des Verbindungselementes 10 angeordnete erste Montagebereich 18 weist zudem einen Absatz 48 auf, welcher der Aufnahme eines ersten Dämpfungsmittels (nicht dargestellt) dienen kann. Der erste Montagebereich 18, und insbesondere der Absatz 48, ist im Wesentlichen plan ausgebildet.

### Bezugszeichenliste

- 10: Verbindungselement
- 12: Dämpfungssystem
- 14: Lagerstelle
- 16: erstes Dämpfungsmittel
- 18: erster Montagebereich
- 20: Tragelement
- 22: Karosserie
- 24: Kabine
- 26: zweiter Montagebereich
- 28: zweites Dämpfungsmittel
- 30: Auskragung
- 32: Aufnahmeprofil
- 34: Befestigungsbereich
- 36: Rahmenprofil
- 38: Verbindungsprofil
- 40: Durchgangsbohrung
- 42: Sackloch
- 44: Lagerbolzen
- 46: Gußteil
- 48: Absatz

## Patentansprüche

1. Verbindungselement für eine Lagerstelle (14) eines Dämpfungssystems (12) zur Lagerung einer Kabine (24), insbesondere eines landwirtschaftlichen Fahrzeuges, mit einem ersten Montagebereich (18) zur Aufnahme eines mit einem Tragelement (20) verbundenen ersten Dämpfungsmittels (16) zur Dämpfung einer Bewegung der Kabine (24), **dadurch gekennzeichnet, dass**
das Verbindungselement (10) einen zweiten Montagebereich (26) zur alternativen Aufnahme eines zweiten Dämpfungsmittels (28) aufweist, wobei der zweite Montagebereich (26) oberhalb des ersten, insbesondere bodenseitig des Verbindungselementes (10) ausgebildeten, Montagebereiches (18) angeordnet ist.

2. Verbindungselement nach Anspruch 1, **dadurch gekennzeichnet, dass** der zweite Montagebereich (26) in Form einer Auskragung (30), insbesondere an einem oberen Ende des Verbindungselementes (10), ausgebildet ist.

3. Verbindungselement nach Anspruch 1 oder 2, **dadurch gekennzeichnet, dass** der zweite Montagebereich (26) ein, insbesondere geschlossenes, Aufnahmeprofil (32) zur Aufnahme des zweiten Dämpfungsmittels (28) aufweist.

4. Verbindungselement nach einem der vorherigen Ansprüche, **dadurch gekennzeichnet, dass** der zweite Montagebereich (26) einen Lagerbolzen (44) zur gelenkigen Lagerung des zweiten Dämpfungsmittels (28) aufweist.

5. Verbindungselement nach einem der vorherigen Ansprüche, **dadurch gekennzeichnet, dass** der zweite Montagebereich (26), und insbesondere das Aufnahmeprofil (32), ein Sackloch (42) und eine Durchgangsbohrung (40) zur Lagerung des Lagerbolzens (44) aufweist.

6. Verbindungselement nach einem der vorherigen Ansprüche, **dadurch gekennzeichnet, dass** das Verbindungselement (10) seitlich und/oder oberseitig Befestigungsbereiche (34) zur Verbindung mit der Kabine (24) aufweist.

7. Verbindungselement nach einem der vorherigen Ansprüche, **dadurch gekennzeichnet, dass** ein Befestigungsbereich (34) in Form eines Verbindungsprofils (38) zur kraftschlüssigen und/oder formschlüssigen Verbindung mit der Kabine (24) ausgebildet ist.

8. Verbindungselement nach einem der vorherigen Ansprüche, **dadurch gekennzeichnet, dass** das Verbindungselement (10) in Form eines Blechbauteils und/oder eines Gußbauteils (46) ausgebildet ist.

9. Dämpfungssystem zur Lagerung einer Kabine (24), insbesondere eines landwirtschaftlichen Fahrzeuges, mit mindestens einer Lagerstelle (14) mit mindestens einem Verbindungselement (10) nach einem der Ansprüche 1 bis 8.

10. Landwirtschaftliches Fahrzeug, insbesondere Traktor, umfassend eine an einer Karosserie (22) gelagerte Kabine (24), **dadurch gekennzeichnet, dass** zur Lagerung der Kabine (24) mindestens ein Verbindungselement (10) nach einem der Ansprüche 1 bis 8 und/oder ein Dämpfungssystem (12) nach Anspruch 9 vorgesehen ist.

## Claims

1. A connection element for a bearing (14) of a damping system (12) for mounting a cabin (24), in particular of an agricultural vehicle, having a first mounting region (18) for receiving a first damping means (16) which is connected to a support element (20) for damping a movement of the cabin (24), **characterized in that**
the connection element (10) has a second mounting region (26) for the alternative receipt of a second damping means (28), wherein the second mounting region (26) is disposed above the first mounting region (18), which latter is in particular constructed on the bottom of the connection element (10).

2. The connection element according to claim 1, **characterized in that** the second mounting region (26) is constructed in the form of a projection (30), in particular at an upper end of the connection element (10).

3. The connection element according to claim 1 or claim 2, **characterized in that** the second mounting region (26) has a receiving profile (32), which in particular is closed, for receiving the second damping means (28).

4. The connection element according to one of the preceding claims, **characterized in that** the second mounting region (26) has a mounting pin (44) for mounting the second damping means (28) in an articulated manner.

5. The connection element according to one of the preceding claims, **characterized in that** the second mounting region (26), and in particular the receiving profile (32), has a blind hole (42) and a through hole (40) for mounting the mounting pin (44).

6. The connection element according to one of the preceding claims, **characterized in that** the connection element (10) has lateral and/or upper fastening regions (34) for connection to the cabin (24).

7. The connection element according to one of the preceding claims, **characterized in that** a fastening region (34) is constructed in the form of a connection profile (38) for frictional and/or interlocking connection to the cabin (24).

8. The connection element according to one of the preceding claims, **characterized in that** the connection element (10) is constructed in the form of a sheet metal component and/or a cast component (46).

9. A damping system for mounting a cabin (24), in particular of an agricultural vehicle, having at least one bearing (14) with at least one connection element (10) according to one of claims 1 to 8.

10. An agricultural vehicle, in particular a tractor, comprising a cabin (24) mounted on a chassis (22), **characterized in that** at least one connection element (10) according to one of claims 1 to 8 and/or a damping system (12) according to claim 9 is/are provided for mounting the cabin (24).

## Revendications

1. Elément de liaison destiné à un point d'appui (14) d'un système d'amortissement (12), en vue du support d'une cabine (24), en particulier d'un véhicule agricole, comprenant une première zone de montage (18) pour accueillir un premier moyen d'amortissement (16) relié à un élément support (20) et destiné à amortir un mouvement de la cabine (24), **caractérisé en ce que**
l'élément de liaison (10) présente une deuxième zone de montage (26) pour accueillir de manière alternative un deuxième moyen d'amortissement (28), la deuxième zone de montage (26) étant disposée au-dessus de la première zone de montage (18) réalisée notamment côté fond de l'élément de liaison (10).

2. Elément de liaison selon la revendication 1, **caractérisé en ce que** la deuxième zone de montage (26) est réalisée sous la forme d'un élément en porte-à-faux (30), en particulier à une extrémité supérieure de l'élément de liaison (10).

3. Elément de liaison selon la revendication 1 ou 2, **caractérisé en ce que** la deuxième zone de montage (26) présente un profilé de réception (32), notamment fermé, destiné à accueillir le deuxième moyen d'amortissement (28).

4. Elément de liaison selon l'une des revendications précédentes, **caractérisé en ce que** la deuxième zone de montage (26) présente un tourillon (44) destiné au support articulé du deuxième moyen d'amortissement (28).

5. Elément de liaison selon l'une des revendications précédentes, **caractérisé en ce que** la deuxième zone de montage (26), et notamment le profilé de réception (32), présente un trou borgne (42) et un trou débouchant (40), en vue du support du tourillon (44).

6. Elément de liaison selon l'une des revendications précédentes, **caractérisé en ce que** l'élément de liaison (10) présente, sur le côté et/ou sur le dessus, des zones de fixation (34) pour la liaison avec la cabine (24).

7. Elément de liaison selon l'une des revendications précédentes, **caractérisé en ce qu'**une zone de fixation (34) est réalisée sous la forme d'un profilé d'assemblage (38) destiné à l'assemblage par adhérence ou par forme avec la cabine (24).

8. Elément de liaison selon l'une des revendications précédentes, **caractérisé en ce que** l'élément de liaison (10) est réalisé sous la forme d'une pièce en tôle et/ou d'une pièce coulée en fonte (46).

9. Système d'amortissement destiné au support d'une cabine (24), en particulier d'un véhicule agricole, comprenant au moins un point d'appui (14) avec au moins un élément de liaison (10) selon l'une des revendications 1 à 8.

10. Véhicule agricole, notamment tracteur, comprenant une cabine (24) montée sur une carrosserie (22), **caractérisé en ce que** pour le support de la cabine (24), il est prévu au moins un élément de liaison (10) selon l'une des revendications 1 à 8 et/ou un système d'amortissement (12) selon la revendication 9.
